# EUROPÄISCHE PATENTSCHRIFT

(11) **EP 1 169 626 B1**
(45) Veröffentlichungstag und Bekanntmachung des Hinweises auf die Patenterteilung: **10.10.2007**
(21) Anmeldenummer: 00918863.2
(22) Anmeldetag: 07.04.2000
(51) Int. Cl.: G01J 3/453, G01J 9/02

(54) **VORRICHTUNG UND VERFAHREN ZUR OPTISCHEN SPEKTROSKOPIE**
DEVICE AND METHOD FOR OPTICAL SPECTROSCOPY
DISPOSITIF ET PROCEDE DE SPECTROSCOPIE OPTIQUE

(30) Priorität: 09.04.1999 DE 19916072; 18.05.1999 DE 19922783; 15.07.1999 DE 19933290
(43) Veröffentlichungstag der Anmeldung: 09.01.2002
(73) Patentinhaber: Campus Technologies AG, 6300 Zug (CH)
(72) Erfinder: WEITZEL, Thilo, D-72070 Tübingen (DE)
(74) Vertreter: Lorenz, Eduard
(86) Internationale Anmeldenummer: PCT/EP2000/003145
(87) Internationale Veröffentlichungsnummer: WO 2000/062026

(56) Entgegenhaltungen:
- EP-A- 0 415 143
- EP-A- 0 767 361
- US-A- 5 059 027
- PATENT ABSTRACTS OF JAPAN vol. 017, no. 596 (P-1636), 29. Oktober 1993 (1993-10-29) & JP 05 180696 A (NEC CORP), 23. Juli 1993 (1993-07-23)
- PATENT ABSTRACTS OF JAPAN vol. 016, no. 247 (P-1365), 5. Juni 1992 (1992-06-05) & JP 04 055726 A (CANON INC), 24. Februar 1992 (1992-02-24)

## Beschreibung

Die Erfindung betrifft eine Vorrichtungen und Verfahren zur optischen Spektroskopie.

Optische Spektrometer können eingeteilt werden in dispersive bzw. diffraktive Spektrometer und Fourier-Transform-Spektrometer.

Dispersive (aus Prismen-) bzw. diffraktive (Gitter-) Spektrometer zerlegen den einfallenden Lichtstrahl durch die Wellenlängenabhängigkeit eines Beugungs- bzw. Reflexionswinkels in seine spektralen Komponenten. Die verschiedenen spektralen Komponenten werden dadurch räumlich getrennt und die zu bestimmenden spektrale Komponente kann selektiert werden (Monochromator). Die Aufnahme eines Spektrums erfolgt dann mit Hilfe beweglicher Teile, indem die verschiedenen spektralen Komponenten nacheinander selektiert und gemessen werden.

Am gebräuchlichsten sind Monochromatoren mit einem Strahlengang nach Czerny-Turner, d.h. mit einem drehbaren Plangitter zwischen einem Eintritts- und einem Austritts-Spalt und voneinander unabhängigen Kollimator- bzw. Kollektor-Spiegeln.

Die Entwicklung ortsauflösender Detektoren (CCD, Diodenarray) erlaubt inzwischen die gleichzeitige Messung aller spektralen Komponenten, indem für jede spektrale Komponente ein eigenes Element des Detektors vorgesehen wird. Eine derartige Anordnung kommt ohne bewegliche Teile aus und nutzt das zur Verfügung stehende einfallende Licht wesentlich effizienter.

Moderne Geräte verwenden z.B. ein holographisch optisches Gitter, das einen Eintrittsspalt unmittelbar mit geeigneter spektraler Dispersion auf ein Diodenarray abbilden kann.

Fourier-Transform-Spektrometer basieren auf einem Interferometer, bei dem die Differenz der optischen Weglängen der zur Interferenz gebrachten Teilstrahlen mit hoher Präzision eingestellt werden kann. Aus einer Messung des Interferenzsignals über einen geeigneten Bereich von Weglängendifferenzen kann durch Fourier-Transformation das Spektrum bestimmt werden.

Geräte werden in der Regel nach Art eines Michelson-Interferometers aufgebaut. Technisch anspruchsvoll sind hier aber vor allem die mechanischen Komponenten zur Einstellung der optischen Weglängen durch verschiebbare Spiegel oder kippbare Spiegelpaare. Die mögliche Leistungsfähigkeit dispersiver bzw. diffraktiver Spektrometer ist abhängig von bestimmten Parametern, insbesondere den Abmessungen von Eintritts- bzw. Austrittsspalt, der Brennweite und Apertur der abbildenden Elemente und den Eigenschaften des dispersiven bzw. diffraktiven Elementes selbst. Moderne Geräte erreichen fast diese physikalisch gesetzten Grenzen.

Entsprechend ist die mögliche Leistungsfähigkeit von Fourier-Transform-Spektrometern durch bestimmte Parameter und hier insbesondere durch die Strecke und die Schrittweite für die Variation der optischen Weglängen bestimmt. Die Leistungsfähigkeit von Fourier-Transform-Spektrometern übersteigt bei weitem die Möglichkeit von dispersiven bzw. diffraktiven Spektrometern.

Auch Fourier-Transform-Spektrometer können die physikalischen Grenzen ihrer Leistungsfähigkeit beinahe erreichen, jedoch ist der technische Aufwand gegebenenfalls sehr hoch. Da Fourier-Transform-Spektrometer auf einem Interferometer basieren, müssen alle optischen Komponenten und insbesondere auch die beweglichen Teile mit einer Präzision von Bruchteilen der zu messenden Wellenlängen gefertigt und positioniert werden.

Weiter sind räumliche Fourier-Transform-Spektrometer bekannt ("spatial heterodyne spectrometer"), welche ein spektral dispersives Interferometer sowie einen räumlich auflösenden Detektor verwenden und daher ohne bewegliche Teile auskommen. Bisher bekannte Spektrometer dieser Bauart mit symmetrischen Armen des Interferometers, sind optisch relativ aufwendig aufgebaut und daher mechanisch anfällig. Eine derartige Anordnung wird in US 5 059 027 (Roesler; Harlander, 1991) beschrieben. Hier wird ein senkrecht auf ein planares Beugungsgitter einfallender Lichtstrahl in zwei Teilstrahlen unter der jeweils 1. Beugungsordnung symmetrisch geteilt. Diese Anordnung entspricht damit optisch einem Michelson-Interferometer mit dispersivem Strahlteiler. Eine vergleichbare dispersive Variante eines Michelson Interferometers für die Spektroskopie wurde bereits 1970 in Applied Optics, Vol 10, No. 5 , p.1137ff (Dohi; Suzuki) beschrieben. Aus der JP 05180696 ist ein bildgebendes, scannendes FT-Spektrometer bekannt, das auf einem Michelson-Interferometer mit Prismen und ohne die Verwendung eines Beugungsgitters basiert. Die JP 04055726 beschreibt ein räumliches FT-Spektrometer basierend auf einem Michelson-Interferometer mit konventionellem Strahlteiler und einem dispersiven Element in einem der Arme.

Aufgabe der vorliegenden Erfindung ist es, eine besonders kompakte Vorrichtung und ein Verfahren zu schaffen, durch welche die Vorteile räumlicher Fourier-Transform-Spektrometers besser nutzbar werden bei gleichzeitig wesentlich niedrigeren Ansprüchen an die Qualität der optischen Komponenten und die mechanischen Elemente.

Erfindungsgemäß wird die Aufgabe ausgehend von einer neuartigen interferometrischen Vorrichtung nach dem Oberbegriff des Anspruchs 1 durch die hinzutretenden Merkmale des kennzeichnenden Teils des Anspruchs 1 gelöst.

Vorzugsweise Ausführungsformen der Erfindung ergeben sich aus den sich an den Hauptanspruch anschließenden Unteransprüchen 2 bis 9, ein erfindungsgemäßes Verfahren und bevorzugte Verfahrensvarianten ergeben sich aus den Ansprüchen 16 bis 21.

Die Erfindung umfaßt eine Vorrichtung, die auf einer Kombination dispersiver bzw. diffraktiver optischer Elemente und einem ortsauflösenden Detektor mit einem Interferometer beruht, sowie ein Verfahren, das es erlaubt das Spektrum des einfallenden Lichtes aus einem aufgenommenen Interferenzmuster zu rekonstruieren.

Die erfindungsgemäße Vorrichtung ist so ausgelegt, daß sich die Interferenzmuster jeweils verschiedener spektraler Komponenten des zu untersuchenden spektralen Bereichs voneinander unterscheiden. Ein derartiges einer bestimmten spektralen Komponente zugeordnetes Interferenzmuster wird im folgenden als Basismuster bezeichnet. Die Muster können eindimensional oder zweidimensional betrachtet werden. Ein durch eine erfindungsgemäße Vorrichtung erzeugtes Interferenzmuster wird als Überlagerung einer Reihe von jeweils unterschiedlichen Basismustern betrachtet.

Die Aufnahme des Interferenzmusters erfolgt durch den Detektor an diskreten Positionen. Ein Interferenzmuster liegt also jeweils in Form einer fixen Anzahl von (Meß-) Werten vor. Genauigkeit und darstellbare Raumfrequenzen folgen aus dem Sampling-Theorem.

Beim erfindungsgemäßen Verfahren wird ein Interferenzmuster als Reihe von Werten und damit im Kontext der linearen Algebra als Vektor interpretiert oder insbesondere als Element eines diskreten Hilbertraumes der entsprechenden Dimension. Die oben eingeführten Basismuster werden im Kontext der linearen Algebra als linear unabhängige Basisvektoren interpretiert.

Das erfindungsgemäße Verfahren beruht auf der Möglichkeit, für eine erfindungsgemäße Vorrichtung die jeweils erforderlichen Basismuster entweder rechnerisch oder durch Messung zu bestimmen. Beim erfindungsgemäßen Verfahren kann dann das Spektrum des einfallenden Lichtes durch Zerlegung des Interferenzmusters in diese Basismuster gewonnen werden.

Das Verfahren kann in verschiedenen Varianten realisiert werden:

Unter günstigen Umständen (gutes Signal/Rauschverhältnis, fixe Phasenlage, "spektral dicht" liegende Basismuster) kann eine direkte Berechnung der Linearkombination unter Benutzung der Inversen der durch die Basismuster gebildeten Matrix erfolgen.

In der Regel und im allgemeinen Fall erfolgt die Zerlegung näherungsweise durch Korrelation der jeweiligen Basismuster mit dem Interferenzmuster. In diesem Fall werden keine hohen Anforderungen an die Basismuster gestellt und es besteht z.B. die Möglichkeit für eine spektrale Komponente mehrere Basismuster bei unterschiedlichen Phasenlagen zu verwenden.

Im Falle des technisch auf einer völlig unterschiedlichen Richtung basierenden Fourier-Transform-Spektrometers ist das Muster eindimensional und die Basismuster sind die von der jeweiligen Phasenlage abhängigen Summen der Sinus- bzw. Kosinuskomponenten mit einer durch die Wellenlänge der jeweiligen spektralen Komponente eindeutig gegebenen Raumfrequenz. In diesem idealen Fall kann das Spektrum durch eine Fourier-Transformation des gemessenen Interferenzmusters bestimmt werden.

Im Falle des durch eine erfindungsgemäße Vorrichtung erzeugten räumlichen Interferenzmusters sind die Basismuster im allgemeinen nicht genau sinus- oder kosinusförmig. Sowohl die genaue Art der Basisfunktionen als auch der jeweilige Zusammenhang eines Basismusters mit der Wellenlänge einer spektralen Komponente ist eindeutig definiert durch die Eigenschaften der jeweils konkreten Vorrichtung.

Soweit die Interferenzmuster, d.h. die Basismuster für die in Frage kommenden spektralen Komponenten, im Rahmen der Auflösung und Genauigkeit der Messung linear unabhängig sind, können die jeweiligen spektralen Komponenten des einfallenden Lichtes und damit das Spektrum durch Korrelation der jeweiligen Basismuster mit dem aufgenommenen Interferenzmuster bestimmt werden.

Soweit die Eigenschaften aller Komponenten der Vorrichtung ausreichend präzise bestimmt sind, kann der erforderliche Satz Basismuster berechnet werden.

Besonders interessant ist die Möglichkeit, mit Hilfe einer geeigneten einstellbaren monochromatischen Referenzlichtquelle einen Satz von Basismustern für den jeweiligen konkreten Aufbau der Vorrichtung zu messen. Da die Basismuster in diesem Fall alle Arten von in der jeweiligen Vorrichtung auftretenden optischen Aberrationen bereits enthalten, sind die Ansprüche an die optische Qualität der Komponenten der Vorrichtung relativ gering, soweit die Basismuster linear unabhängig bleiben.

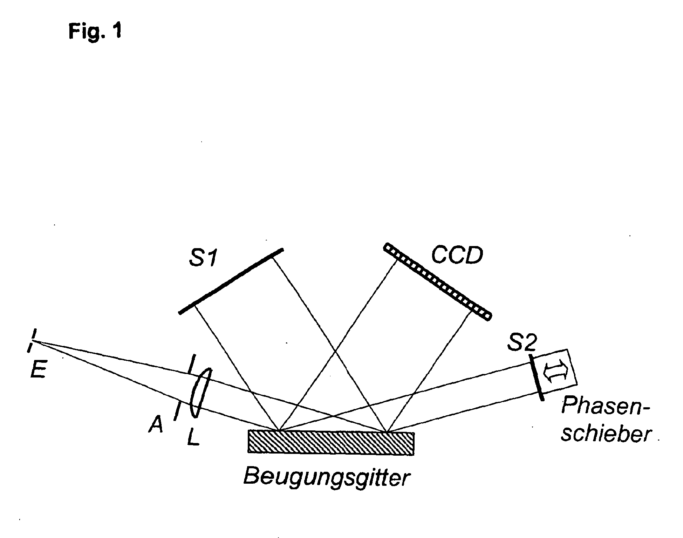

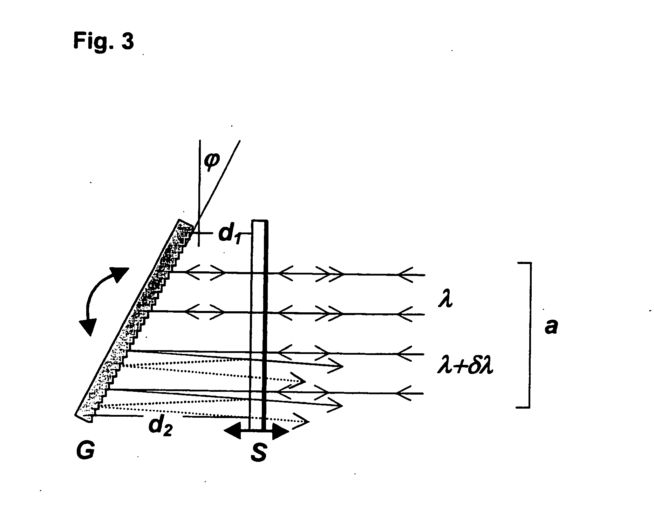

Neben der bevorzugten und außerordentlich kompakten Ausgestaltung der Erfindung gemäss Abbildung 1 nach Anspruch 1, kommen auch andere Interferometer mit optisch unterschiedlich gestalteten Armen bzw. optischen Wegen in Frage, etwa die ebenfalls sehr kompakten Anordnungen gemäss den Abbildungen 3 bis 5 nach Anspruch 2.

Eine technisch vorteilhafte Anordnung einer erfindungsgemäßen Vorrichtung zeigt Fig.1. In diesem Fall wird ein Beugungsgitter in Reflexion verwendet. Der über die Eintrittsöffnung "E", die Aperturblende "A" und die Kollimationslinse "L" einfallende Lichtstrahl wird zunächst am Beugungsgitter in einen reflektierten und einen gebeugten Teilstrahl geteilt. In der dargestellten Geometrie erfolgt die Beugung erster Ordnung unter einem relativ großen Winkel, so daß keine höheren Beugungsordnungen auftreten.
Der zunächst gebeugte Teilstrahl wird durch den Spiegel S1 zurück gespiegelt und vom Beugungsgitter weiter zum Detektor reflektiert, während der zunächst reflektierte Teilstrahl durch den Spiegel S2 zurück gespiegelt und weiter zum Detektor gebeugt wird. Am Detektor entsteht das benötigte Interferenzmuster.
Über S2 kann gegebenenfalls die Modulation der Phasenlage erfolgen ("Phasenschieber"), über S1 kann gegebenenfalls der Winkel unter dem die vereinigten Strahlen interferieren justiert werden.
Neben dem außerordentlich kompakten Aufbau zeigt die Anordnung weitere Vorteile:
Für spezielle Anwendungen, etwa in der Chemometrie der Nachweis einer Substanz durch die Bestimmung spektraler "Fingerprints" in bestimmten Bereichen eines Absorptionsspektrums, oder die gleichzeitige Bestimmung bestimmter spektraler Linien, können - wie auch in den anderen erfindungsgemäßen Anordnungen - spezielle Beugungsgitter verwendet werden. Neben räumlich getrennten oder räumlich überlagerten Mehrfachgittern und gegebenenfalls einer Anordnung mit mehreren Detektoren, kommen hier auch holographische Elemente in Betracht, die z.B. ganze Gruppen von unterschiedlichen Spektrallinien unter dem gleichen Winkel beugen können. Diese Variante kann besonders günstig sein bei Verwendung eines Detektors, der eine Maske zur Erkennung von Mustern verwendet (optisches Korrelationsverfahren).

Die für eine Messung erforderliche Korrelation eines gemessenen Interferenzmusters mit dem für eine bestimmte spektrale Komponente oder eine Gruppe spektraler Komponenten bekannten Interferenzmuster kann sehr vorteilhaft unmittelbar optisch mit Hilfe einer Maske und ggf. geeigneter Phasenmodulation oder anderweitiger Verstimmung des Interferometers erfolgen.
Insbesondere können in einer einzelnen Maske bereits die Interferenzmuster eines spektralen Fingerprints mit vielen spektralen Komponenten enthalten sein.

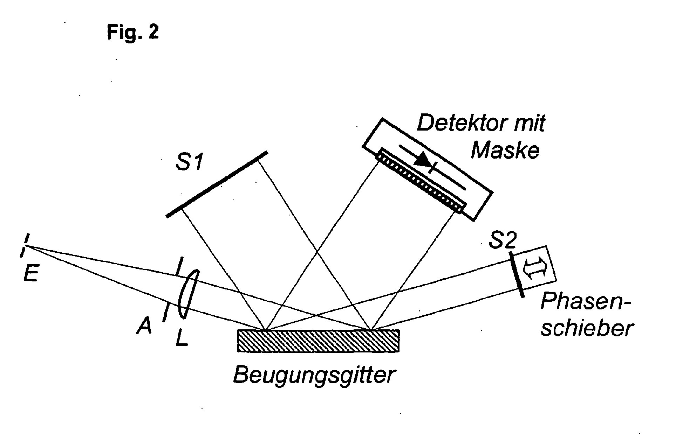

Die mehrfache Aufnahme des Interferenzmusters durch die dem Detektor vorgelagerte Maske hindurch bei unterschiedlichen relativen Phasenlagen der Teilstrahlen zeigt eine starke Abhängigkeit der jeweils gemessenen integrierten gesamten Intensität des Signals von der relativen Phasenlage nur für diejenigen spektralen Komponenten des einfallenden Lichtes mit deren resultierenden Interfernzmustern die Maske korreliert. Fig. 2 zeigt eine entsprechende Variante der Anordnung am Beispiel der Anordnung aus Fig. 1.
Gemäß der bevorzugten Ausgestaltung der Erfindung kann das Interferenzmuster durch Teilung der Amplitude des einfallenden Lichtstrahls durch ein geeignetes Beugungsgitter (gegebenenfalls in mehr als zwei Teilstrahlen) und anschließender Überlagerung der Strahlen am Ort des Detektors erzeugt werden. Durch geeignete Dimensionierung der Vorrichtung können die am Detektor auftretenden Raumfrequenzen unabhängig vom jeweils zu untersuchenden Wellenlängenbereich gewählt werden.

Als räumlich auflösender Detektor bietet sich im eindimensionalen Fall ein geeignetes Diodenarray oder eine CCD-Zeile an. Es ist auch möglich, zu scannen, d.h. entweder durch Bewegung des Detektors oder anderer Komponenten der Vorrichtung, die verschiedenen Meßpunkte nacheinander aufzunehmen. Dieses Verfahren bietet sich besonders an für extrem hochauflösende Messungen (z.B. Scannen eines Diodenarrays senkrecht zu seiner Ausdehnung) oder in Wellenlängenbereichen für die keine geeigneten ortsauflösenden Detektoren verfügbar sind.

Besonders interessant ist die Verwendung zweidimensionaler Detektoren (CCD oder andere), da in diesem Fall mit der Erhöhung der Anzahl der Meßwerte erheblich größerer Spielraum für die Eigenschaften der Basisfunktionen besteht und bei "besser" linear unabhängigen Funktionen die jeweiligen Korrelationen entsprechend schärfer berechnet werden können.

Die Leistungsfähigkeit der Vorrichtung und des im folgenden beschriebenen Verfahrens kann wesentlich verbessert werden, wenn die relative Phasenlage der Teilstrahlen geeignet beeinflußt werden kann. Dies kann geschehen etwa durch die Verwendung eines über eine Strecke in der Größenordnung der Wellenlänge linear verschiebbaren Spiegels, durch den die relative Phasenlage des reflektierten Lichtes mit großer Genauigkeit verändert werden kann oder durch eine geeignete "seitliche" Verschiebung der Komponenten, insbesondere des Beugungsgitters.

Weitere Einzelheiten und Vorteile der Erfindung werden anhand von in der Zeichnung dargestellten Ausführungsbeispielen und Vergleichsdiagrammen näher erläutert.

Die interferometrischen Vorrichtungen können derart ausgeführt oder weitergebildet werden, daß ein optischer Resonator entsteht. Dies hat zur Folge, daß die Vorrichtungen oder Teile der Vorrichtungen mehrfach genutzt werden und die resultierenden Interferenzen durch Überlagerung mehrerer, gegebenenfalls sehr vieler Teilstrahlen gebildet werden. Eine derartige Überlagerung vieler Teilstrahlen zeigt, verglichen mit der entsprechenden Zweistrahl-Interferenz, gegebenenfalls sehr viel schärfere Minima bzw. Maxima der Intensität.

Bei geeigneter Bearbeitung der jeweiligen Meßwerte kann so eine entsprechend höhere Genauigkeit bzw. spektrale Auflösung erreicht werden.

Die technische Ausführung des Resonators ist dabei von untergeordneter Bedeutung. Neben einfachen Resonatoren mit nur zwei Bauelementen (Fig. 3) kommen alle Arten von Resonatoren insbesondere auch Ring-Kavitäten in Frage.

Besonders vorteilhaft sind Ausführungen bei denen mindestens ein Element des Resonators als wellenlängenabhängiges Element ausgeführt ist oder bei denen sich ein wellenlängenabhängiges Element im Inneren des Resonators befindet (oder beides).

### Die Funktionsweise wird dargestellt anhand von Fig. 3:

Der Strahlteiler wird gebildet durch einen halbdurchlässigen Spiegel ***S***, der einen Teil des Lichtes reflektiert. Das wellenlängenabhängige Element ist im Beispiel als Gitter ***G*** ausgeführt und derart dimensioniert und angeordnet (Winkel ϕ), daß Licht einer bestimmten Wellenlänge λ zum Spiegel ***S*** zurück reflektiert wird [Gitterkonstante = λ/(2sin(ϕ))]. Der dort transmittierte Teil interferiert mit dem vom Spiegel ursprünglich reflektierten Licht.

Abhängig von der Effizienz des Gitters und den Reflexions- bzw. Transmissionskoeffizienten des Spiegels treten mehrfach reflektierte Strahlen unterschiedlicher Intensität auf, welche die resultierenden Interferenzmuster in der oben dargestellten Weise beeinflussen. Die relative Phasenlage der Teilstrahlen kann durch geeignete Verschiebung von S beeinflußt werden.

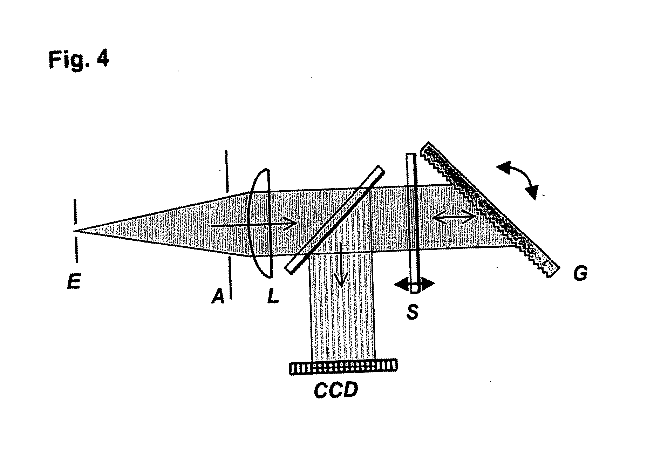

Fig. 4 zeigt eine Anwendung des vorgenannten Funktionsprinzips. Der Resonator wird durch die Elemente ***S1*** und ***G*** gebildet. Die Wellenlänge des Resonators kann durch Drehung des Gitters ***G*** verändert werden, die relative Phasenlage der Teilstrahlen kann durch geeignete Verschiebung von ***S1*** beeinflußt werden. Über einen zweiten Strahlteiler ***S2*** wird das Interferenzmuster zum ortsauflösenden Detektor CCD geführt. Mit ***E*** ist die Eintrittsblende und mit ***A*** die Aperturblende bezeichnet. ***L*** ist ein Kollimator.

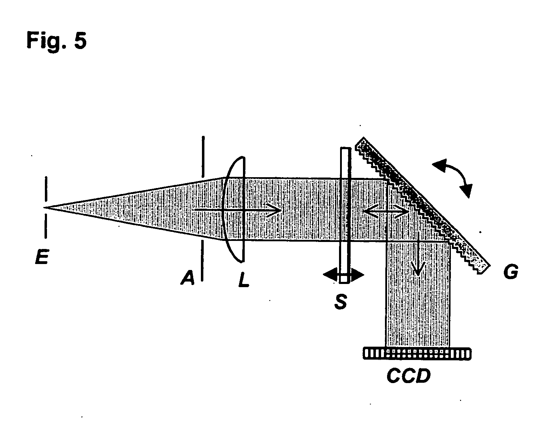

Fig. 5 zeigt ein erfindunsgemäßes Ausführungsbeispiel. Hier wird die 0-te Beugungsordnung des Gitters, d.h. der ungebeugt reflektierte Teil des Lichtes zum ortsauflösenden Detektor (***CCD***) geführt, während der andere Teilstrahl als gebeugter Teilstrahl zunächst zurück zum halbdurchlässigen Spiegel S läuft, dann erneut zum Gitter und nochmals geteilt über die nullte Ordnung (Reflektion) zur CCD bzw. wieder zurück zum Spiegel S usw.

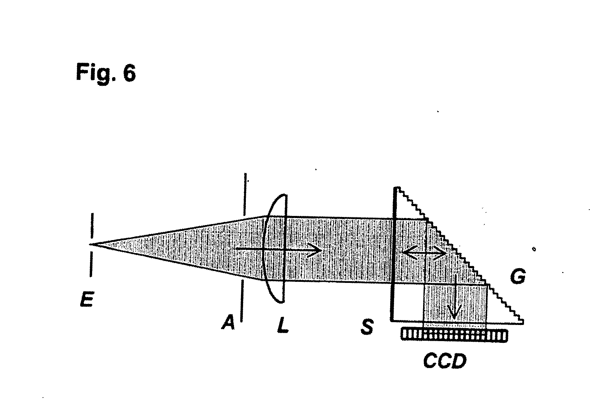

Soweit auf eine Kontrolle der relativen Phasenlage verzichtet werden kann, bildet eine Ausführung nach Fig. 6 eine vorteilhafte Anordnung. Hier sind Gitter G und Spiegel S auf einem im Querschnitt ein Dreieck bildenden Glasträger angeordnet.

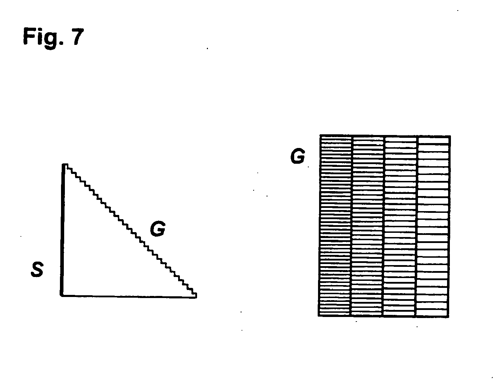

Besonders vorteilhaft kann es sein, das Beugungsgitter G in Segmente unterschiedlicher Gitterkonstanten zu unterteilen (Fig. 7), oder Beugungsstrukturen zu verwenden, die nicht periodisch sind.

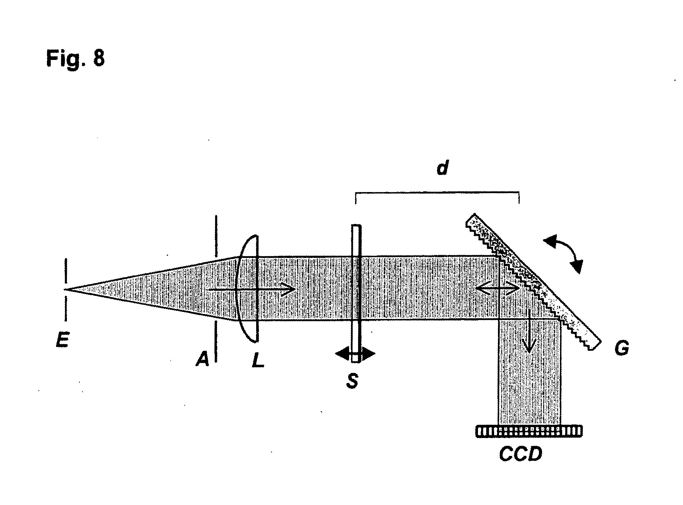

In einer weiteren Ausführung (Fig. 8) wird die optische Weglänge d absichtlich vergrößert und wahlweise variabel gehalten. Die Interferenzen werden dann auf Komponenten des einfallenden Lichtes mit entsprechend hoher Kohärenzlänge bzw. kleiner Bandbreite begrenzt (abhängig von der Weglänge d).

Bei geeigneter Auswertung der Meßwerte abhängig von d können, insbesondere bei hoher Effizienz des Gitters G und hohem Reflexionskoeffizienten von S sehr hohe spektrale Auflösungen erzielt werden.

Gemäß einer vorteilhaften Ausgestaltung der Erfindung weist die Vorrichtung Mittel zur Variation der Weglängendifferenz der zur Interferenz gebrachten Teilstrahlen auf, wodurch eine Selektion der zur Interferenz beitragenden Lichtkomponenten entsprechend ihren Kohärenzeigenschaften durchführbar ist.

Die dargestellten interferometrischen Vorrichtungen können derart ausgeführt oder weitergebildet werden, daß die optischen Weglängen, unter denen die Teilstrahlen zur Interferenz gebracht werden, über ein durch das oder die dispersiven Elemente eingebrachtes Maß hinaus differieren.

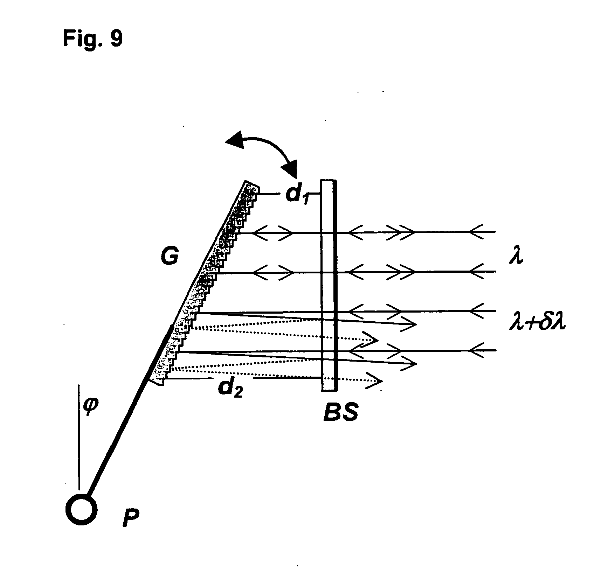

Am Beispiel der in Fig. 9 gezeigten Anordnung lassen sich die Verhältnisse darstellen wie folgt:

Die Differenz der optischen Weglängen der zur Interferenz gebrachten Teilstrahlen liegt zwischen **2*d₁** und **2*d₂.** Eine Wegstrecke **2*(d₂-d₁)** wird vom optischen Gitter für die spektrale Selektion verwendet. Die dieser Differenz entsprechende Kohärenzlänge definiert die spektrale Auflösung der Apparatur. Darüber hinaus wird nur dann ein Interferenzsignal erzeugt, wenn die einfallende Strahlung im Bereich der optischen Weglängendifferenzen zwischen **2*d₁** und **2*d₂** Kohärenzeigenschaften bzw. Autokorrelationseigenschaften zeigt.

Bei einer Anwendung im Bereich der optischen Spektroskopie können auf diese Weise selektiv Linienspektren aufgenommen werden. In diesem Fall tragen nur spektral schmalbandige Komponenten der einfallenden Strahlung mit Kohärenzlängen größer als **2*d₁** zum gemessenen Signal bei.

Bei einer Anwendung im Bereich der optischen Datenübertragung können selektiv Träger mit Autokorrelationseigenschaften im Bereich zwischen **2*d₁** und **2*d₂** aufgenommen bzw. vermessen werden. Dies ist insbesondere interessant für eine Anwendung im Bereich des Kohärenzlängen-Multiplexing.

Für beide Anwendungsbereiche besteht der besondere Vorteil der Anordnung darin, daß die spektrale Auflösung (Spektroskopie) bzw. Bandbreite (Datenübertragung) unabhängig von der zu selektierenden Linienbreite (Spektroskopie) bzw. Autokorrelationslänge (Datenübertragung) eingestellt werden kann.

Eine weitere erfindungsgemäße Ausgestaltung sieht vor, daß die Vorrichtung Mittel zur Drehung des Interferometers bzw. Mittel zur Veränderung oder Auswahl des Einfallswinkels aufweist, welche eine Einstellung der Raumfrequenz bzw. der Raumfrequenzen des erzeugten Interferenzmusters ermöglichen.

Der Wellenlängenbereich, den die Anordnung ohne bewegliche Teile erfassen kann, ist gegeben durch die Fähigkeit des Detektors, die entsprechenden Raumfrequenzen im Interferenzmuster nachzuweisen. Von besonderem Vorteil für eine technische Realisierung der Anordnung kann es sein, die Auswahl eines Wellenlängenbereichs d.h. in diesem Fall die Einstellung des Interferometers dergestalt, daß die für diesen Wellenlängenbereich resultierenden Raumfrequenzen vom Detektor erfaßt werden können, durch eine Drehung des Interferometers als Ganzes bzw. durch eine geeignete Veränderung des Einfallswinkels zu erreichen. Für diese Bauform kommt das Interferometer selbst - abgesehen von den gegebenenfalls erforderlichen Mitteln zur Phasenmodulation - ohne bewegliche Elemente aus und kann trotzdem für verschiedene Wellenlängenbereiche eingesetzt werden.

In diesem Fall können die Komponenten des Interferometers gegeneinander fixiert werden, was sich vorteilhaft auf die Stabilität der Justierung auswirkt. Voraussetzung für die Wellenlängenabstimmung über den Einfallswinkel ist, daß der Winkel, unter dem die Teilstrahlen im Interferometer überlagert werden eine geeignete Abhängigkeit vom Einfallswinkel zeigt. Dies ist z.B. dann der Fall, wenn die Teilstrahlen spiegelbildlich überlagert werden, d.h. die Teilstrahlen müssen in einem diesbezüglich asymmetrischen Interferometer über eine jeweils um 1 verschiedene Anzahl von Spiegeln geführt werden.

Eine weitere vorteilhafte Ausgestaltung der Erfindung sieht vor, daß die Vorrichtung Mittel zur Lageveränderung von Bauelementen, insbesondere Mittel zur Drehung der Bauelemente aufweist, welche eine Einstellung der Raumfrequenz bzw. der Raumfrequenzen des erzeugten Interferenzmusters ermöglichen.

Eine einfache Möglichkeit, einen Wellenlängenbereich auszuwählen, d.h. in diesem Fall die Einstellung des Interferometers so vorzunehmen, daß die für diesen Wellenlängenbereich resultierenden Raumfrequenzen vom Detektor erfaßt werden können, sind Mittel, welche es erlauben, den Winkel zu verändern, unter dem die Teilstrahlen zur Interferenz gebracht werden.

Gemäß einer weiteren vorteilhaften Ausgestaltung der Erfindung erfolgt die Veränderung der relativen Phasenlage der interferierenden Teilstrahlen und die Veränderung der Raumfrequenz bzw. der Raumfrequenzen des erzeugten Interferenzmusters gemeinsam durch Bewegung mindestens eines Bauelements der Vorrichtung.

Es ist vorteilhaft, Messungen bei unterschiedlichen relativen Phasenlage der Teilstrahlen vorzunehmen. Sind die optischen Weglängen der Teilstrahlen ungleich und/oder führt die Verkippung der optischen Elemente zu einer Veränderung der Differenz der optischen Weglängen der Teilstrahlen, dann ändert sich bei der Einstellung der Wellenlänge auch die relative Phasenlage des Interferenzmusters. Dieser Effekt kann unmittelbar zur Messung bei verschiedenen Phasenlagen genutzt werden. Dies ist für eine technische Ausführung besonders vorteilhaft, da ein separater Mechanismus für die Modulation der Phasenlage dann entfallen kann.

Fig. 9 zeigt ein Beispiel für eine Bauform des Interferometers, welche die spektrale Selektion und die Modulation der relativen Phasenlage durch eine gemeinsame Bewegung erlaubt. Die Drehung eines der optischen Elemente um einen Stützpunkt P außerhalb des Strahlengangs bewirkt neben der Veränderung des Winkels und damit der Einstellung der selektierten Wellenlänge gleichzeitig eine Veränderung der optischen Weglänge und damit eine Modulation der relativen Phasenlage.

Gemäß einer weiteren vorteilhaften Ausgestaltung der Erfindung ist das spektral dispersive bzw. diffraktive Element ein Multiplex-Gitter, ein Multiplex-Hologramm, ein holografisch-optisches Element oder ein computergeneriertes Hologramm (CGH).

Bei Verwendung eines zweidimensional auflösenden Detektors kann es besonders vorteilhaft sein, spektral dispersive Elemente zu verwenden, welche nicht nur eine einfache Ablenkung des jeweiligen Teilstrahls bewirken. Insbesondere im Zusammenhang mit den dargestellten Korrelationsverfahren erscheint die Erzeugung komplizierterer Interferenzmuster vorteilhaft. Derart komplexe Muster zeigen gegebenenfalls ein schärfer definiertes Korrelationssignal als einfache Streifenmuster.

Bei Verwendung von perfekten optischen Elementen und einer ausreichend kleinen Lichtquelle bzw. Lichteintrittsfläche kann das optische Spektrum durch Fourier-Transformation des Interferenzmusters gewonnen werden.

Bei Verwendung nicht ganz perfekter optischer Elemente oder größerer Eintrittsblenden und insbesondere bei Verwendung zusätzlicher dispersiver Elemente, welche die Wellenfronten abhängig von Ort und Wellenlänge beeinflussen, können die resultierenden Interferenzmuster nicht durch Sinus- oder Kosinus-Funktionen dargestellt werden. Gleichwohl können die einzelnen spektralen Komponenten anhand des dann vorliegenden Interferenzmusters durch Korrelation bestimmt werden, sofern die jeweils durch eine einzelne der zu untersuchenden spektralen Komponente erzeugten Basismuster eindeutig sind.
Dieses Verfahren ist damit auch geeignet für die dargestellten Vorrichtungen, die sehr "unregelmäßige" spektral dispersive bzw. diffraktive optische Elemente verwenden.

Besonders günstig ist es, die erforderlichen Interferenzmuster für die einzelnen spektralen Komponenten durch eine Messung mit anschließender Renormierung zu gewinnen.

Besonders günstig ist es weiterhin, die Aufnahme des Interferenzmusters bei verschiedenen relativen Phasenlagen vorzunehmen. Neben dem günstigen Einfluß auf das Signal/Rausch-Verhältnis werden dadurch gegebenenfalls Artefakte des Meßvorgangs eliminiert.

Insbesondere bei der Messung der Interferenzmuster der einzelnen spektralen Komponenten (Basisfunktionen) kann die Messung bei verschiedenen relativen Phasenlagen hilfreich sein. Es werden bei Subtraktionen gegenphasig aufgenommener Interferenzmuster die Signalanteile addiert, jedoch konstanter Hintergrund und Artefakte des Meßvorganges weitgehend eliminiert.

Vorteilhafterweise wird ein optisches Spektrum unter Verwendung der bisher beschriebenen Vorrichtung nach einem Verfahren berechnet, welches folgende Schritte umfaßt: Zunächst werden mehrere Interferenzmuster für verschiedene relative Phasenlagen der interferierenden Teilstrahlen aufgezeichnet. In einem weiteren Schritt wird ein hochaufgelöstes Interferenzmuster oder hochaufgelöste Komponenten eines Interfernzmusters berechnet, wobei die unterschiedlich ausgeprägte Phasenverschiebung der zur Interferenz beitragenden spektralen Komponenten der Teilstrahlen berücksichtigt wird.

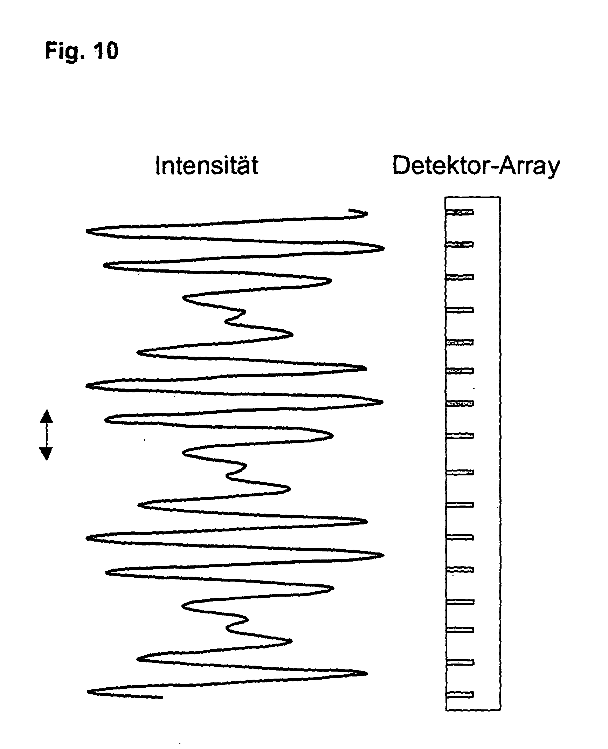

Eine Vorrichtung mit einem Array-Detektor etwa gemäß Fig. 10 erlaubt Verfahren, die mit Hilfe einer Veränderung der relativen Phasenlage der zur Interferenz gebrachten Teilstrahlen das resultierende Interferenzmuster derart am Detektor bewegen oder verändern, daß durch mehrere Messungen bei unterschiedlichen Phasenlagen die Ortsauflösung erhöht wird, mit der das Interferenzmuster gemessen wird. Die durch die Veränderung der Phasenlage erzeugte scheinbare Bewegung der verschiedenen Komponenten des Interferenzmusters erlaubt es, mit den einzelnen Elementen des Detektors schrittweise jeweils einen bestimmten Bereich des Interferenzmusters mit hoher Auflösung zu erfassen. Zu beachten ist dabei, daß die sehr kleinen Veränderung der optischen Weglängen, wie sie durch die Mittel zur Einstellung der relativen Phasenlage der zur Interferenz gebrachten Teilstrahlen erzeugt werden, makroskopische "Verschiebungen" des Interferenzmusters bewirken können und, daß sich dabei die verschiedenen spektralen Komponenten des Interferenzmusters unterschiedlich stark, gegebenenfalls sogar in unterschiedlichen Richtungen, bewegen.

Die erfindungsgemäßen Vorrichtungen werden als Spektrometer nutzbar durch das erfindungsgemäße Verfahren. Das Interferenzmuster einer spektralen Komponente hat in einem idealen Interferometer eine eindimensionale sinusoidale Modulation der Intensität mit einer Raumfrequenz die nur von der Wellenlänge des einfallenden Lichtes abhängt. Die jeweiligen Anteile verschiedener spektraler Komponenten können in diesem Fall durch Fourier-Transformation des Interferenzmusters gewonnen werden.

Ein reales Spektrometer und insbesondere die verschiedenen Varianten erfindungsgemäßer Vorrichtungen zeigen komplexere Interferenzmuster. Die spektralen Komponenten können mit Hilfe des erfindungsgemäßen Verfahrens bestimmt werden.

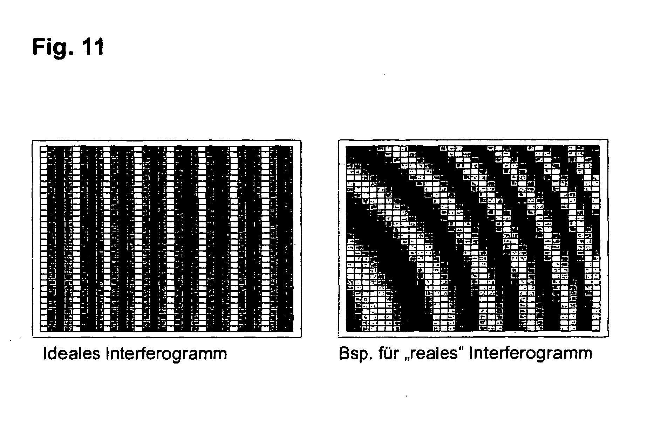

Fig. 11 zeigt simulierte Aufnahmen von Interferogrammen durch ein CCD, links die Messung eines "idealen" Interferogramms, rechts eine realistische Simulation ausgehend von nicht perfekten optischen Elementen.

Die optischen Elemente einer erfindungsgemäßen Vorrichtung müssen für die Anwendbarkeit des erfindungsgemäßen Verfahrens nicht den Ansprüchen genügen, die in der Regel an Bauelemente optischer Interferometer gestellt werden.

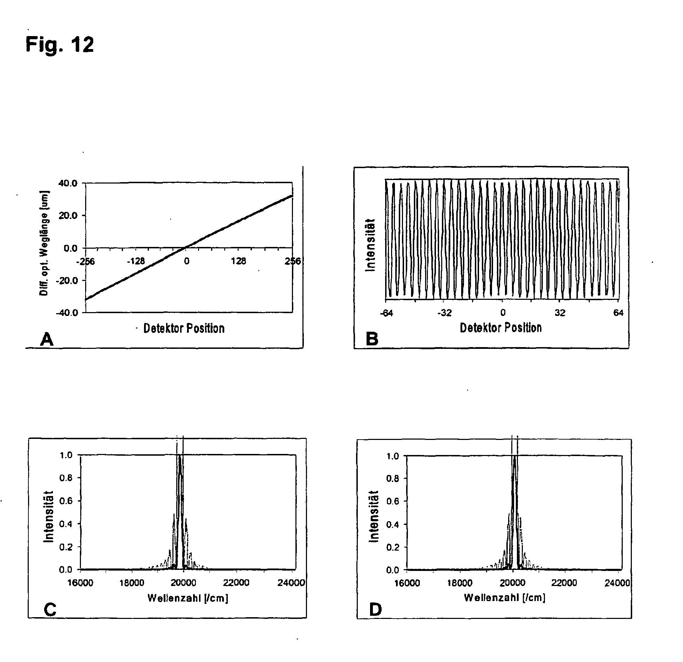

Die Fig. 12 bis 14 verdeutlichen die Vorteile des neuen Verfahrens anhand einer numerischen Simulation für einen linear ortsauflösenden Detektor mit 512 Elementen. Die Abbildungsteile A zeigen jeweils die Differenzen der optischen Weglängen von zwei zur Interferenz beitragenden Teilstrahlen abhängig von der Position des jeweiligen Elementes des Detektors. Die Abbildungsteile B zeigen jeweils einen Ausschnitt des vom Detektor aufgenommenen Signals. Die Abbildungsteile C und D zeigen jeweils das rekonstruierte Spektrum einer monochromatischen Quelle. Im Abbildungsteil C als Vergleich bestimmt durch Fourier-Transformation, im Abbildungsteil D bestimmt durch das erfindungsgemäße Verfahren. Die Abbildungsteile C und D zeigen das rekonstruierte Spektrum (dicke Linie) jeweils zusätzlich auch zehnfach überhöht (dünne Linie).

Fig. 12 zeigt zunächst eine Simulation unter Annahme einer absolut perfekten optischen Vorrichtung, d.h. die Differenzen der optischen Weglängen von zwei zur Interferenz beitragenden Teilstrahlen hängen linear mit der Position des jeweiligen Elementes des Detektors zusammen (Fig. 12A). Das Interferenzmuster einer spektralen Komponente ist sinusoidal, das entsprechende gemessene Interferenzmuster (Fig. 12B) zeigt abhängig von der Raumfrequenz Sampling-Artefakte, gibt aber das Interfernzmuster gut wieder.

Die Situation entspricht in diesem speziellen Fall, obwohl mit einer ganz anderen Vorrichtung aufgenommen, etwa der Messung durch ein Fourier-Transform-Spektrometer. Entsprechend kann das Spektrum durch Fourier-Transformation bestimmt werden (Fig. 12C). Das erfindungsgemäße Verfahren durch Korrelation mit gemessenen Basismustern zeigt das gleiche Ergebnis (Fig. 12D).

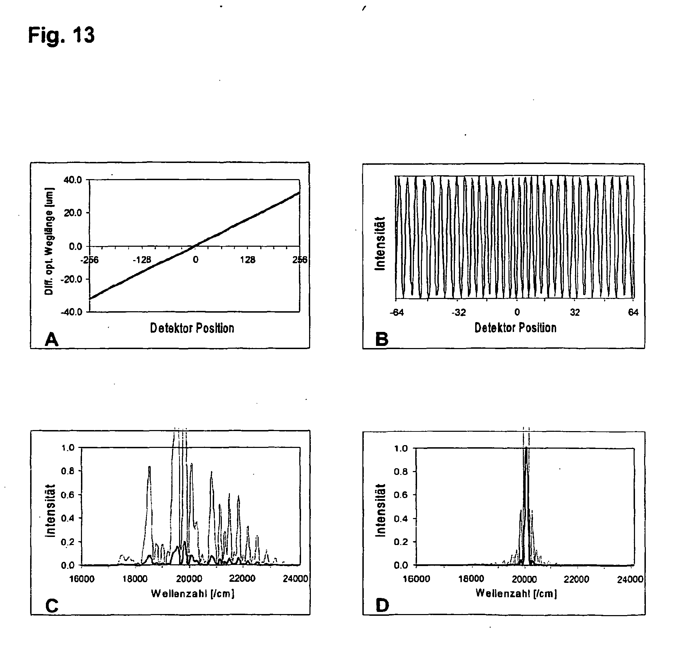

Fig. 13 zeigt eine entsprechende Simulation unter Annahme einer nicht ganz perfekten optischen Anordnung. Entsprechend ist der Zusammenhang mit den Differenzen der optischen Weglängen der beteiligten Strahlen und der Position des jeweiligen Elementes des Detektors nicht perfekt linear (Fig. 13A). Das resultierende Interferenzmuster ist nicht mehr genau sinusoidal und zeigt leichte Variationen der Raumfrequenz (Fig. 13B). Der Versuch das Spektrum durch Fourier-Transformation zurückzugewinnen scheitert (Fig. 13C). Das erfindungsgemäße Verfahren ist in der Lage, das Spektrum ohne Qualitätsverlust zu rekonstruieren (Fig. 13D).

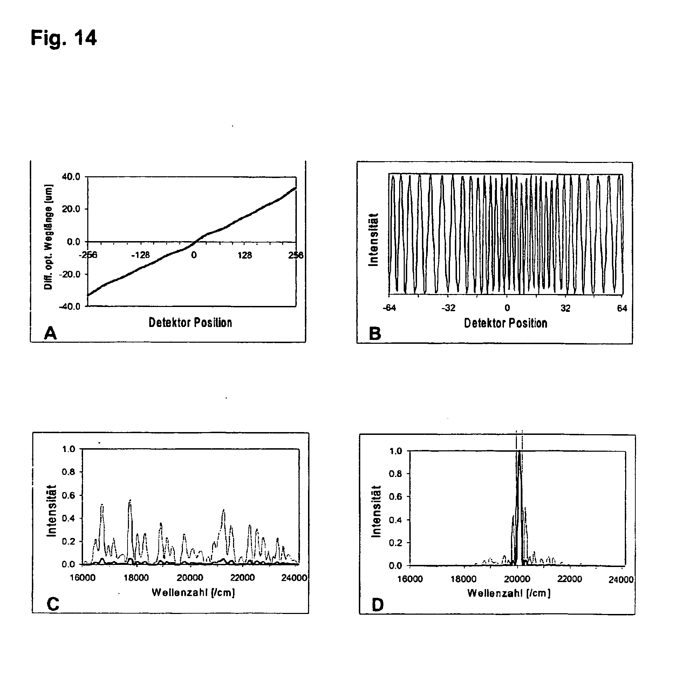

Fig. 14 zeigt die entsprechende Simulation unter Annahme grob fehlerhafter optischer Elemente, mit entsprechend zwar noch monotonem, aber nicht mehr linearem Zusammenhang zwischen den Differenzen der optischen Weglängen der beteiligten Strahlen und der Position des jeweiligen Elementes des Detektors (Fig. 14A). Das resultierende Interferenzmuster ist entsprechend unregelmäßig (Fig. 14B). Die Fourier-Transformation führt hier zu keinem Ergebnis (Fig. 14C). Mit Hilfe des erfindungsgemäßen Verfahrens kann das Spektrum auch in dieser Situation fast ohne Qualitätsverlust rekonstruiert werden (Fig. 14D).

## Patentansprüche

1. Vorrichtung zur optischen Spektroskopie mit Mitteln zur Erzeugung eines Interferenzmusters und einem räumlich auflösenden Detektor (CCD), der das erzeugte Interferenzmuster aufnehmen kann, wobei durch ein spektral diffraktives optisches Element (Beugungsgitter, G) die Wellenfronten mindestens eines der am Interferenzmuster beteiligten Teilstrahlen abhängig von der Wellenlänge beeinflusst werden,
**dadurch gekennzeichnet, dass** das diffraktive optische Element
ein Beugungsgitter (G) ist, welches derart angeordnet ist, dass der einfallende Strahl durch das Beugungsgitter (G) zunächst in einen reflektierten Teilstrahl 0-te Ordnung und einen gebeugten Teilstrahl 1-te Ordnung geteilt wird,
dass ein Spiegel (S, S1) derart angeordnet ist, dass der zunächst am Beugungsgitter (G) gebeugte Teilstrahl zum Beugungsgitter (G) zurückreflektiert und dann vom Beugungsgitter zum Detektor (CCD) reflektiert wird und
dass das Beugungsgitter (G) und der Detektor (CCD) derart angeordnet sind, dass der vom Beugungsgitter (G) zunächst reflektierte Teilstrahl zum Detektor (CCD) läuft
oder
dass ein weiterer Spiegel (S2) vorgesehen ist, der derart angeordnet ist, dass der vom Beugungsgitter (G) zunächst reflektierte Teilstrahl von dem weiteren Spiegel (S2) zum Beugungsgitter (G) zurückreflektiert und dann vom Beugungsgitter (G) zum Detektor (CCD) gebeugt wird,
wobei sich die resultierenden Teilstrahlen am Ort des Detektors (CCD) überlagern und ein Interferenzmuster bilden.

2. Vorrichtung nach Anspruch 1, **dadurch gekennzeichnet, dass** die Vorrichtung oder Teile der Vorrichtung einen optischen Resonator bilden.

3. Vorrichtung nach Anspruch, 1 oder 2, **dadurch gekennzeichnet, dass** das Beugungsgitter (6) über nicht periodische Beugungsstrukturen verfügt.

4. Vorrichtung nach einem der Ansprüche 1 bis 3, **dadurch gekennzeichnet, dass** sie einen räumlich eindimensional auflösenden und/oder scannenden Detektor aufweist.

5. Vorrichtung nach einem der Ansprüche 1 bis 3, **dadurch gekennzeichnet, dass** sie einen räumlich zweidimensional auflösenden und/oder scannenden Detektor aufweist.

6. Vorrichtung nach einem der Ansprüche 1 bis 5, **gekennzeichnet durch** Mittel die eine Veränderung bzw. Modulation der relativen Phasenlage der Teilstrahlen erlauben.

7. Vorrichtung nach einem oder mehreren der vorangehenden Ansprüche, **dadurch gekennzeichnet, dass** die Vorrichtung oder Teile der Vorrichtung mehrfach ausgeführt sind.

8. Vorrichtung nach einem oder mehreren der vorangehenden Ansprüche, **dadurch gekennzeichnet, daß** die Differenz der optischen Weglängen der zur Interferenz gebrachten Strahlen verändert werden kann.

9. Vorrichtung nach einem oder mehreren der vorangehenden Ansprüche, **dadurch gekennzeichnet, dass** die Vorrichtung Mittel zur Einstellung der Weglängendifferenz der zur Interferenz gebrachten Teilstrahlen aufweist, wodurch eine Selektion der zur Interferenz beitragenden Lichtkomponenten entsprechend ihren Kohärenzeigenschaften durchführbar ist.

10. Vorrichtung nach einem oder mehreren der vorangehenden Ansprüche, **dadurch gekennzeichnet, dass** die Vorrichtung Mittel zur Drehung des Beugungsgitters (6) bzw. Mittel zur Veränderung oder Auswahl des Einfallswinkels aufweist, welche eine Einstellung der Raumfrequenz bzw. der Raumfrequenzen des erzeugten Interferenzmusters ermöglichen.

11. Vorrichtung nach einem oder mehreren der vorangehenden Ansprüche, **dadurch gekennzeichnet, daß** die Vorrichtung Mittel zur Lageveränderung von Bauelementen der Vorrichtung, insbesondere Mittel zur Drehung der Bauelemente, aufweist, welche eine Einstellung der Raumfrequenz bzw. der Raumfrequenzen des erzeugten Interferenzmusters ermöglichen.

12. Vorrichtung nach einem oder mehreren der vorangehenden Ansprüche, **dadurch gekennzeichnet, dass** die Veränderung der relativen Phasenlage der interferierenden Teilstrahlen und die Veränderung der Raumfrequenz bzw. der Raumfrequenzen des erzeugten Interferenzmusters gemeinsam durch Bewegung mindestens eines Bauelements der Vorrichtung erfolgt.

13. Vorrichtung nach einem oder mehreren der vorangehenden Ansprüche, **dadurch gekennzeichnet, dass** das Beugungsgitter ein Multiplex-Gitter, ein Multiplex-Hologramm, ein holographisch-optisches Element oder ein Computergeneriertes Hologramm ist.

14. Vorrichtung nach einem oder mehreren der vorangehenden Ansprüche, **dadurch gekennzeichnet, dass** der Detektor über eine räumliche Maske (Detektor mit Maske) verfügt, die mit mindestens einem zu erkennenden Interferenzmuster korreliert.

15. Vorrichtung nach einem oder mehreren der vorangehenden Ansprüche, **dadurch gekennzeichnet, dass** die Fähigkeit des Detektors, eine räumliche Modulation zu erkennen, dergestalt realisiert wird, das ein primär nicht ortsauflösender Detektor mit einer geeigneten räumlichen Maske (Detektor mit Maske) kombiniert wird.

16. Verfahren zur Bestimmung des optischen Spektrums durch Analyse des mit einer Vorrichtung nach einem der Ansprüche 1 bis 18 oder unter Verwendung einer Vorrichtung gemäß einem der Ansprüche 1 bis 18 gemessenen Interferenzmusters, **dadurch gekennzeichnet, dass** die Bestimmung des Spektrums die Zerlegung des Interferenzmusters in einem Satz vorrichtungsabhängiger Basismuster umfasst, insbesondere die Bestimmung einer spektralen Komponente durch Korrelation des Interferenzmusters mit einem für die jeweilige Vorrichtung und die zu bestimmende spektrale Komponente erstellten Basismusters.

17. Verfahren nach Anspruch 16, **dadurch gekennzeichnet, dass** die zur Bestimmung der spektralen Komponenten erforderlichen Basismuster durch eine Messung gewonnen werden.

18. Verfahren nach Anspruch 16 oder 17, **dadurch gekennzeichnet, dass** die Bestimmung des Spektrum die Aufnahme verschiedener Interferenzmuster bei verschiedenen relativen Phasenlagen umfaßt.

19. Verfahren nach einem oder mehreren der Ansprüche 16 bis 18, **dadurch gekennzeichnet, dass** die Bestimmung der Basismuster die Aufnahme verschiedener Interferenzmuster bei verschiedenen relativen Phasenlagen umfasst.

20. Verfahren zur Berechnung eines optischen Spektrums unter Verwendung einer Vorrichtung nach einem oder mehreren der Ansprüche 6 bis 15, **gekennzeichnet durch** folgende Schritte:
a) Aufzeichnen mehrerer Interferenzmuster für verschiedene relative Phasenlagen der interferierenden Teilstrahlen;
b) Berechnen eines hochaufgelösten Interferenzmusters oder hochaufgelöster Komponenten eines Interferenzmusters unter Berücksichtigung der unterschiedlich ausgeprägten Phasenverschiebung der zur Interferenz beitragenden spektralen Komponenten der Teilstrahlen.

21. Verfahren nach einem oder mehreren der Ansprüche 16 bis 19 unter Verwendung eines Verfahrens nach Anspruch 20.

## Claims

1. An apparatus for optical spectroscopy having means to produce an interference pattern and having a spatially resolving detector (CCD) which can record the interference pattern produced, wherein the wavefronts of at least one of the part rays involved in the interference pattern are influenced by a spectrally diffractive optical element (diffraction grating, G) in dependence on the wavelength,
**characterized in that**
the diffractive optical element is a diffraction grating (G) which is arranged such that the incident ray is first split by the diffraction grating (G) into a reflected part ray of the 0th order and a diffracted part ray of the 1 st order;
**in that** a mirror (S, S1) is arranged such that the part ray first diffracted at the diffraction grating (G) is reflected back to the diffraction grating (G) and is then reflected by the diffraction grating to the detector (CCD); and
**in that** the diffraction grating (G) and the detector (CCD) are arranged such that the part ray first reflected by the diffraction grating (G) extends to the detector (CCD);
or
**in that** a further mirror (S2) is provided which is arranged such that the part ray first reflected by the diffraction grating (G) is reflected back to the diffraction grating (G) by the further mirror (S2) and is then diffracted by the diffraction grating (G) to the detector (CCD),
with the resulting part rays being superimposed on one another at the location of the detector (CCD) and forming an interference pattern.

2. An apparatus in accordance with claim 1, **characterized in that** the apparatus or parts of the apparatus form an optical resonator.

3. An apparatus in accordance with either of claims 1 or 2, **characterized in that** the diffraction grating (G) has non-periodical diffraction structures.

4. An apparatus in accordance with any one of the claims 1 to 3, **characterized in that** it has a detector which resolves spatially in one dimension and/or scans.

5. An apparatus in accordance with any one of the claims 1 to 3, **characterized in that** it has a detector which resolves spatially in two dimensions and/or scans.

6. An apparatus in accordance with any one of the claims 1 to 5, **characterized by** means which permit a change or modulation of the relative phase position of the part rays.

7. An apparatus in accordance with one or more of the preceding claims, **characterized in that** the apparatus or parts of the apparatus are made in multiple form.

8. An apparatus in accordance with one or more of the preceding claims, **characterized in that** the difference of the optical path lengths of the rays brought to interference can be changed.

9. An apparatus in accordance with one or more of the preceding claims, **characterized in that** the apparatus has means to set the path length difference of the part rays brought to interference, whereby a selection of the light components contributing to interference can be carried out in accordance with their coherence properties.

10. An apparatus in accordance with one or more of the preceding claims, **characterized in that** the apparatus has means to rotate the diffraction grating (G) or means to change or select the angle of incidence which allow an adjustment of the spatial frequency or of the spatial frequencies of the interference pattern produced.

11. An apparatus in accordance with one or more of the preceding claims, **characterized in that** the apparatus has means to change the position of components of the apparatus, in particular means to rotate the components which allow an adjustment of the spatial frequency or of the spatial frequencies of the interference pattern produced.

12. An apparatus in accordance with one or more of the preceding claims, **characterized in that** the change in the relative phase position of the interfering part rays and the change in the spatial frequency or in the spatial frequencies of the interference pattern produced takes place jointly by movement of at least one component of the apparatus.

13. An apparatus in accordance with one or more of the preceding claims, **characterized in that** the diffraction grating is a multiplex grating, a multiplex hologram, a holographic-optical element or a computer generated hologram.

14. An apparatus in accordance with one or more of the preceding claims, **characterized in that** the detector has a spatial mask (detector with mask) which correlates with at least one interference pattern to be detected.

15. An apparatus in accordance with one or more of the preceding claims, **characterized in that** the capability of the detector to recognize a spatial modulation is realized such that a primarily non-spatially resolving detector is combined with a suitable spatial mask (detector with mask).

16. A method for the determination of the optical spectrum by analysis of the interference pattern measured with an apparatus in accordance with any one of the claims 1 to 18 or using an apparatus in accordance with any one of the claims 1 to 18, **characterized in that** the determination of the spectrum comprises the breaking down of the interference pattern in a set of apparatus-dependent basic patterns, in particular the determination of a spectral component by correlation of the interference pattern with a basic pattern prepared for the respective apparatus and for the spectral component to be determined.

17. A method in accordance with claim 16, **characterized in that** the basic patterns required to determine the spectral components are gained by a measurement.

18. A method in accordance with claim 16 or 17, **characterized in that** the determination of the spectrum comprises the recording of different interference patterns at different relative phase positions.

19. A method in accordance with one or more of the claims 16 to 18, **characterized in that** the determination of the basic patterns comprises the recording of different interference patterns at different relative phase positions.

20. A method for the calculation of an optical spectrum using an apparatus in accordance with one or more of the claims 6 to 15, **characterized by** the following steps
a) recording of a plurality of interference patterns for different relative phase positions of the interfering part rays;
b) calculation of a highly resolved interference pattern or of highly resolved components of an interference pattern taking into account the differently pronounced phase shift of the spectral components of the part rays contributing to the interference.

21. A method in accordance with one or more of the claims 16 to 19 using a method in accordance with claim 20.

## Revendications

1. Dispositif de spectroscopie optique avec des moyens de génération d'une figure d'interférence et avec un détecteur (CCD) à résolution spatiale, qui peut enregistrer la figure d'interférence, moyennant quoi, par un élément optique spectralement diffractif (réseau de diffraction, G), les fronts d'onde d'au moins un des rayons partiels participant à la figure d'interférence sont influencés en fonction de la longueur d'onde,
**caractérisé en ce que** l'élément optique spectralement diffractif est un réseau de diffraction (G), lequel est disposé de telle sorte que le rayon incident est d'abord divisé par le réseau de diffraction (G) en un rayon partiel réfléchi d'ordre 0 et en un rayon partiel diffracté du 1er ordre,
**en ce qu'**un miroir (S, S1) est disposé de telle sorte que le rayon partiel d'abord diffracté sur le réseau de diffraction (G) est réfléchi de nouveau vers le réseau de diffraction (G) et est ensuite réfléchi du réseau de diffraction au détecteur (CCD) et
**en ce que** le réseau de diffraction (G) et le détecteur (CCD) sont disposés de telle sorte que le rayon partiel tout d'abord réfléchi par le réseau de diffraction (G) se dirige vers le détecteur (CCD)
ou
**en ce qu'**un autre miroir (S2) est prévu, qui est disposé de telle sorte que le rayon partiel, d'abord réfléchi par le réseau de diffraction (G), est réfléchi de nouveau par l'autre miroir (S2) vers le réseau de diffraction (G) et est ensuite diffracté par le réseau de diffraction (G) vers le détecteur (CCD),
lors de quoi les rayons partiels résultants se superposent à l'emplacement du détecteur (CCD) et forment une figure d'interférence.

2. Dispositif selon la revendication 1, **caractérisé en ce que** le dispositif ou des parties du dispositif forment un résonateur optique.

3. Dispositif selon la revendication 1 ou 2, **caractérisé en ce que** le réseau de diffraction (G) dispose de structures de diffraction non périodiques.

4. Dispositif selon l'une quelconque des revendications 1 à 3, **caractérisé en ce qu'**il comporte un détecteur à résolution et/ou à balayage spatial unidimensionnel.

5. Dispositif selon l'une quelconque des revendications 1 à 3, **caractérisé en ce qu'**il comporte un détecteur à résolution et/ou à balayage spatial bidimensionnel.

6. Dispositif selon l'une quelconque des revendications 1 à 5, **caractérisé par** des moyens qui permettent une modification, respectivement une modulation de la position relative de phase des rayons partiels.

7. Dispositif selon l'une ou plusieurs des revendications précédentes, **caractérisé en ce que** le dispositif ou des parties du dispositif sont réalisés en une pluralité d'exemplaires.

8. Dispositif selon l'une ou plusieurs des revendications précédentes, **caractérisé en ce que** la différence des longueurs des chemins optiques des rayons amenés en interférence peut être variée.

9. Dispositif selon l'une ou plusieurs des revendications précédentes, **caractérisé en ce que** le dispositif comporte des moyens pour le réglage de la différence des longueurs des chemins optiques des rayons amenés en interférence, par quoi une sélection des composants de la lumière contribuant à l'interférence peut être effectuée selon leurs propriétés de cohérence.

10. Dispositif selon l'une ou plusieurs des revendications précédentes, **caractérisé en ce que** le dispositif comporte des moyens pour la rotation du réseau de diffraction (G), respectivement des moyens pour la modification ou pour la sélection de l'angle d'incidence, lesquels permettent un réglage de la fréquence spatiale, respectivement des fréquences spatiales de la figure d'interférence engendrée.

11. Dispositif selon l'une ou plusieurs des revendications précédentes, **caractérisé en ce que** le dispositif comporte des moyens pour le changement de position d'éléments du dispositif, en particulier des moyens pour la rotation des composants, lesquels permettent un réglage de la fréquence spatiale, respectivement des fréquences spatiales de la figure d'interférence engendrée.

12. Dispositif selon l'une ou plusieurs des revendications précédentes, **caractérisé en ce que** la modification de la position relative de phase des rayons partiels qui interfèrent et la modification de la fréquence spatiale, respectivement des fréquences spatiales de la figure d'interférence engendrée, s'effectuent ensemble par le déplacement d'au moins un élément de construction du dispositif.

13. Dispositif selon l'une ou plusieurs des revendications précédentes, **caractérisé en ce que** le réseau de diffraction est un réseau multiplex, un hologramme multiplex, un élément opto-holographique ou un hologramme engendré par ordinateur.

14. Dispositif selon l'une ou plusieurs des revendications précédentes, **caractérisé en ce que** le détecteur dispose d'un masque spatial (détecteur avec masque), qui se met en corrélation avec au moins une figure d'interférence à reconnaître.

15. Dispositif selon l'une ou plusieurs des revendications précédentes, **caractérisé en ce que** l'aptitude du détecteur à reconnaître une modulation spatiale est réalisée de telle façon qu'un détecteur primairement sans résolution de position est combiné à un masque spatial approprié (détecteur avec masque).

16. Procédé de détermination du spectre optique par analyse de la figure d'interférence mesurée avec un dispositif selon l'une quelconque des revendications 1 à 15 ou moyennant l'utilisation d'un dispositif selon l'une quelconque des revendications 1 à 15, **caractérisé en ce que** la détermination du spectre comprend la décomposition de la figure d'interférence en un jeu de figures de base indépendantes du dispositif, en particulier la détermination d'une composante spectrale par corrélation de la figure d'interférence avec une figure de base établie pour le dispositif respectif et la composante spectrale à déterminer.

17. Procédé selon la revendication 16, **caractérisé en ce que** la figure de base nécessaire pour la détermination des composantes spectrales est obtenue par une mesure.

18. Procédé selon la revendication 16 ou 17, **caractérisé en ce que** la détermination du spectre comprend l'enregistrement de différentes figures d'interférence à différentes positions de phase relatives.

19. Procédé selon l'une ou plusieurs des revendications 16 à 18, **caractérisé en ce que** la détermination de la figure de base comprend l'enregistrement de différentes figures d'interférence à différentes positions de phase relatives.

20. Procédé de calcul d'un spectre optique moyennant l'utilisation d'un dispositif selon l'une ou plusieurs des revendications 6 à 15, **caractérisé par** les étapes suivantes:
a) enregistrement de plusieurs figures d'interférence pour différentes positions relatives de phase des rayons partiels qui interfèrent;
b) Calcul d'une figure d'interférence à haute résolution ou de composants à haute résolution d'une figure d'interférence en tenant compte du décalage de phase plus ou moins prononcé des composantes spectrales des rayons partiels qui contribuent à l'interférence.

21. Procédé selon l'une ou plusieurs des revendications 16 à 19 moyennant l'utilisation d'un procédé selon la revendication 20.
